# EUROPEAN PATENT APPLICATION

(11) **EP 1 777 760 A1**
(43) Date of publication of application: **25.04.2007**
(21) Application number: 06122192.5
(22) Date of filing: 12.10.2006
(51) Int. Cl.: H01M 2/10, H01M 4/06

(54) **Alkaline battery**

(30) Priority: 21.10.2005 JP 2005307679; 22.05.2006 US 802154 P
(71) Applicant: MATSUSHITA ELECTRIC INDUSTRIAL CO., LTD., Osaka 571-8501 (JP)
(72) Inventor: Okada, Tadaya c/o Matsushita Electric Industrial Co., Ltd..,Ltd., Chuo-Ku Osaka-shi Osaka 540-6319 (JP); Shoji, Yasuhiko c/o Matsushita Electric Industrial Co.,Ltd., Chuo-Ku Osaka-shi Osaka 540-6319 (JP); Noya, Shigeto c/o Matsushita Electric Industrial Co.,Ltd., Chuo-Ku Osaka-shi Osaka 540-6319 (JP)
(74) Representative: TBK-Patent

(57) **Abstract**

An alkaline battery according to the present invention includes: a power generation element including a positive electrode, a negative electrode, a separator placed between the positive electrode and the negative electrode, and an electrolyte; a positive terminal portion electrically connected to the positive electrode; and a negative terminal portion electrically connected to the negative electrode. The positive electrode contains at least nickel oxyhydroxide powder as an active material. A PTC element is provided in a current path that does not come into contact with the electrolyte at least one of between the positive electrode and the positive terminal portion and between the negative electrode and the negative terminal portion.

## Description

### FIELD OF THE INVENTION

The present invention relates to an alkaline battery using nickel oxyhydroxide powder as a positive active material and including a PTC element.

### BACKGROUND OF THE INVENTION

In order to improve safety of batteries, various studies have been conducted on batteries including a PTC element that prevents rapid temperature increase of batteries in case of short circuit.

For example, Japanese Patent Laid-Open No. 2003-217596 proposes that a surface of a negative current collector in an alkaline battery is coated with an electronic conductor mainly composed of polyethylene and having a PTC function.

However, in Japanese Patent Laid-Open No. 2003-217596, the electronic conductor is placed in direct contact with an alkaline electrolyte. Thus, the PTC function of blocking a current in case of short circuit is sufficiently exerted immediately after formation of the battery, but with the passage of time, the electronic conductor coated on a surface of the negative current collector is easily decomposed by the alkaline electrolyte, and the PTC function is sometimes insufficiently exerted.

For increased output of batteries, use of nickel oxyhydroxide as a positive active material has been proposed, but sufficient studies have not been conducted on relationship between an assembling manner of a PTC element, functionality of the PTC element, and a form of nickel oxyhydroxide powder in such an alkaline battery with high output.

Thus, in order to solve the conventional problems, the present invention has an object to provide an alkaline battery that has high output, ensures prevention of rapid temperature increase of the battery in case of short circuit, and is high in safety and reliability.

### BRIEF SUMMARY OF THE INVENTION

The present invention provides an alkaline battery including: a power generation element including a positive electrode, a negative electrode, a separator placed between the positive electrode and the negative electrode, and an electrolyte; a positive terminal portion electrically connected to the positive electrode; and a negative terminal portion electrically connected to the negative electrode, wherein the positive electrode contains at least nickel oxyhydroxide powder as an active material, and a PTC element is provided in a current path that does not come into contact with the electrolyte at least one of between the positive electrode and the positive terminal portion and between the negative electrode and the negative terminal portion. The current path that does not come into contact with the electrolyte means portions that do not come into contact with the electrolyte, and thus includes the positive terminal portion and the negative terminal portion, and do not include the positive electrode and the negative electrode.

It is preferable that the alkaline battery further includes: a battery case that houses the power generation element and also serves as the positive terminal portion; and an assembly sealing portion that closes an opening of the battery case, wherein the assembly sealing portion includes the negative terminal portion, a negative current collector electrically connected to the negative terminal portion, and a resin sealing body, the sealing body includes a central cylindrical portion having a through hole through which the negative current collector is inserted, an outer peripheral cylindrical portion placed between a peripheral edge of the negative terminal portion and an opening end of the battery case, and a connecting portion that connects the central cylindrical portion and the outer peripheral cylindrical portion, the opening end of the battery case is bent so as to wrap an upper end of the outer peripheral cylindrical portion of the sealing body, and the bent portion is crimped inward to fasten the peripheral edge of the negative terminal portion, and the negative terminal portion includes the PTC element.

It is preferable that the negative terminal portion includes a first negative terminal plate and a second negative terminal plate spaced apart from each other and each having a flange in a peripheral edge and a flat portion in a central portion, the PTC element placed between the flat portion of the first negative terminal plate and the flat portion of the second negative terminal plate, and an insulation plate placed between the flange of the first negative terminal plate and the flange of the second negative terminal plate, the opening end of the battery case is bent so as to wrap the upper end of the outer peripheral cylindrical portion of the sealing body, and the bent portion is crimped inward to fasten the flange of the first negative terminal plate, the flange of the second negative terminal plate, and the insulation plate.

It is preferable that the negative terminal portion includes a first negative terminal plate and a second negative terminal plate spaced apart from each other and each having a flange in a peripheral edge and a flat portion in a central portion, and a PTC element placed between the flange of the first negative terminal plate and the flange of the second negative terminal plate, the opening end of the battery case is bent so as to wrap the upper end of the outer peripheral cylindrical portion of the sealing body, and the bent portion is crimped inward to fasten the flange of the first negative terminal plate, the flange of the second negative terminal plate, and the PTC element.

It is preferable that the negative terminal portion includes a first negative terminal plate and a second negative terminal plate spaced apart from each other and each having a flange in a peripheral edge and a flat portion in a central portion, and the PTC element placed on the flat portion of the second negative terminal plate, the flat portion of the second negative terminal plate and the PTC element have, in the centers, through holes through which the negative current collector is inserted, the second negative terminal plate and the PTC element are placed between a head of the negative current collector and the central cylindrical portion, the PTC element is placed between the head of the negative current collector and the flat portion of the second negative terminal plate, the opening end of the battery case is bent so as to wrap the upper end of the outer peripheral cylindrical portion of the sealing body, and the bent portion is crimped inward to fasten the flange of the first negative terminal portion and the flange of the second negative terminal plate.

It is preferable that the negative terminal portion includes a negative terminal plate having a flange in a peripheral edge and a flat portion in a central portion, and the PTC element placed on the flat portion of the negative terminal plate, the PTC element is placed between a head of the negative current collector and the flat portion of the negative terminal plate, the opening end of the battery case is bent so as to wrap the upper end of the outer peripheral cylindrical portion of the sealing body, and the bent portion is crimped inward to fasten the flange of the negative terminal portion.

The nickel oxyhydroxide powder is preferably substantially spherical.

A mean particle size of the nickel oxyhydroxide powder is preferably 8 to 18 µm.

A surface of the nickel oxyhydroxide powder is preferably coated with a layer containing cobalt.

The nickel oxyhydroxide powder preferably contains 0.5 to 2.0 mol% of cobalt as a solid solution or eutectic element.

The nickel oxyhydroxide powder preferably contains 2 to 10 mol% of manganese as a solid solution or eutectic element.

The nickel oxyhydroxide powder preferably contains 2 to 5 mol% of calcium as a solid solution or eutectic element.

The nickel oxyhydroxide powder preferably contains 2 to 5 mol% of zinc as a solid solution or eutectic element.

The nickel oxyhydroxide powder preferably contains 2 to 5 mol% of magnesium as a solid solution or eutectic element.

According to the present invention, an alkaline battery that has high output, ensures prevention of rapid temperature increase of the battery in case of short circuit, and is high in safety and reliability can be provided.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWINGS

FIG. 1 is a front view, partially in section, of an alkaline battery in Embodiment 1 of the present invention;
FIG. 2 is an enlarged vertical sectional view of a sealing portion (an X portion)) in FIG. 1;
FIG. 3 is a vertical sectional view of a sealing portion in Embodiment 2 of the present invention;
FIG. 4 is a vertical sectional view of a sealing portion in Embodiment 3 of the present invention;
FIG. 5 is a vertical sectional view of a sealing portion in Embodiment 4 of the present invention; and
FIG. 6 is a vertical sectional view of a sealing portion of a conventional alkaline battery.

### DETAILED DESCRIPTION OF THE INVENTION

The present invention relates to an alkaline battery including: a power generation element including a positive electrode, a negative electrode, a separator placed between the positive electrode and the negative electrode, and an electrolyte; a positive terminal portion electrically connected to the positive electrode; and a negative terminal portion electrically connected to the negative electrode. The positive electrode contains at least nickel oxyhydroxide powder as an active material, and a PTC element is provided in a current path that does not come into contact with the electrolyte at least one of between the positive electrode and the positive terminal portion and between the negative electrode and the negative terminal portion.

The PTC element is not degraded by contact with the electrolyte, thereby ensuring prevention of rapid temperature increase of the battery in case of external short circuit, and improving safety of the battery.

The present invention is an alkaline battery with high output using nickel oxyhydroxide as a positive active material. It has been proved that use of the PTC element provides a greater heat preventing effect than an conventional alkaline battery using manganese dioxide as a positive active material. This is because in the alkaline battery of the present invention, a large current passes more easily than in the conventional alkaline battery, and the PTC element early functions as a resistor in case of external short circuit to block a short circuit current.

In actual daily life, external short circuit of a battery includes a case of external short circuit with a circuit on the side of a device, a case of an object to be short-circuited having slight resistance, or a case of high contact resistance between the battery and the object to be short-circuited. In this case, time before blocking the short circuit current of the battery changes depending on output properties of the battery. Thus, the conventional alkaline battery is not a battery with high output as in the present invention, and the PTC element does not quickly operate in some cases.

On the other hand, the battery of the present invention is the battery with high output using nickel oxyhydroxide as the positive active material, and a large current passes in the early stage of short circuit more easily than in the conventional alkaline battery. Thus, the function of the PTC element of blocking the short circuit current is more reliably and quickly exerted to more effectively prevent heat of the battery immediately after or during short circuit, than in the conventional alkaline battery using manganese dioxide as the positive active material.

The nickel oxyhydroxide powder is preferably substantially spherical in terms of high charging efficiency and ensuring a large surface area. Being substantially spherical means that a value of longer diameter/shorter diameter of a particle, that is, an aspect ratio is 1.5/1 to 1/1. Further, the aspect ratio is more preferably 1.2/1 to 1/1. Particularly, an aspect ratio closer to 1/1 is preferable providing as spherical a shape as possible.

The aspect ratio is obtained, for example, by photographing a 1000 times enlarged image of a broken surface of a particle using an SEM (scanning electron microscope), determining values of the longer diameter and the shorter diameter based on the obtained SEM photograph, and calculating the ratio between the longer diameter and the shorter diameter using the values.

A mean particle size of the nickel oxyhydroxide powder is preferably 8 to 18 µm in terms of ensuring a large surface area.

The mean particle size is measured, for example, by a laser method using a particle size distribution meter (LA910 produced by Horiba, Ltd.), and calculated as a particle size when a cumulative weight reaches 50%.

A surface of the nickel oxyhydroxide powder is preferably coated with a layer containing cobalt in terms of improved electronic conductivity of a surface of the particle. A thickness of the layer containing cobalt is, for example, 100 to 500 Å. The layer containing cobalt includes, for example, a cobalt hydroxide layer.

The above described nickel oxyhydroxide powder allows a large current to easily pass in the early stage of short circuit, and allows the function of the PTC element of blocking a short circuit current to be more effectively and quickly executed.

The nickel oxyhydroxide powder preferably contains 0.5 to 2.0 mol% of cobalt as a solid solution or eutectic element. The nickel oxyhydroxide containing cobalt increases electronic conductivity of the nickel oxyhydroxide powder, allows a large current to easily pass in the early stage of short circuit, and allows the function of the PTC element of blocking a short circuit current to be more effectively and quickly executed.

If the cobalt content of the nickel oxyhydroxide powder is less than 0.5 mol%, a sufficient advantage of containing cobalt cannot be obtained. On the other hand, if the cobalt content of the nickel oxyhydroxide powder is more than 2.0 mol%, the capacity is easily reduced.

The nickel oxyhydroxide powder preferably contains 2 to 10 mol% of manganese as a solid solution or eutectic element

The nickel oxyhydroxide powder preferably contains 2 to 5 mol% of calcium as a solid solution or eutectic element.

The nickel oxyhydroxide powder preferably contains 2 to 5 mol% of zinc as a solid solution or eutectic element.

The nickel oxyhydroxide powder preferably contains 2 to 5 mol% of magnesium as a solid solution or eutectic element.

As described above, the nickel oxyhydroxide powder contains manganese, calcium, zinc, or magnesium to cause distortion in a crystal lattice of nickel oxyhydroxide, facilitate diffusion of proton in the crystal, and reduce polarization. This allows a large current to easily pass in the early stage of short circuit, and allows the function of the PTC element of blocking a short circuit current to be more effectively and quickly executed.

If the manganese, calcium, zinc, or magnesium content of the nickel oxyhydroxide powder is less than 2 mol%, a sufficient advantage of containing these elements cannot be obtained. If the calcium, zinc, or magnesium content of nickel oxyhydroxide is more than 5 mol%, the capacity is easily reduced. If the manganese content of nickel oxyhydroxide is more than 10 mol%, the capacity is easily reduced.

The alkaline battery further includes, for example, a battery case that houses the power generation element, and an assembly sealing portion that closes an opening of the battery case. The assembly sealing portion includes the negative terminal portion, a negative current collector electrically connected to the negative terminal portion, and a resin sealing body. The sealing body includes a central cylindrical portion having a through hole through which the negative current collector is inserted, an outer peripheral cylindrical portion placed between a peripheral edge of the negative terminal portion and an opening end of the battery case, and a connecting portion that connects the central cylindrical portion and the outer peripheral cylindrical portion. The opening end of the battery case is bent so as to wrap an upper end of the outer peripheral cylindrical portion of the sealing body, the bent portion is crimped inward to fasten the peripheral edge of the negative terminal portion, and the negative terminal portion includes the PTC element.

In the alkaline battery, the positive terminal portion is placed, for example, in a bottom of the battery case, and the positive terminal portion includes the PTC element.

Now, preferred embodiments of the battery in which the negative terminal portion includes the PTC element will be described.

### EMBODIMENT 1

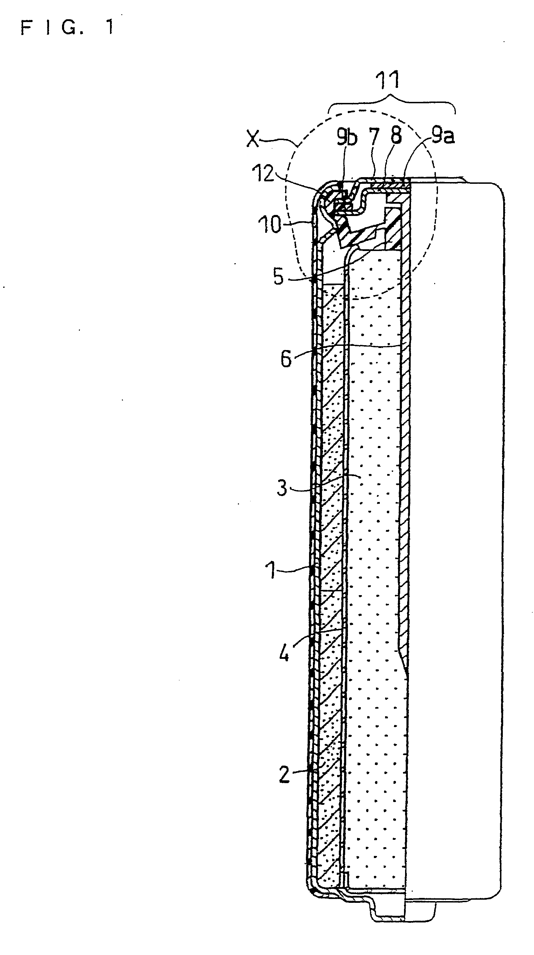

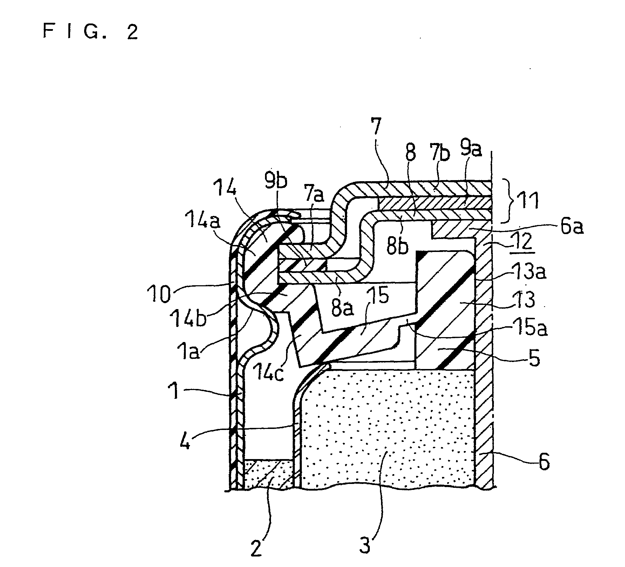

An embodiment of the present invention will be described with reference to FIGS. 1 and 2.

FIG. 1 is a front view, partially in section, of an AA alkaline battery (LR6) according to an embodiment of the present invention.

A hollow cylindrical positive electrode mixture 2 is inscribed in a closed-end cylindrical battery case 1 that also serves as a positive terminal. In a hollow portion of the positive electrode mixture 2, a gel negative electrode 3 is placed via a closed-end cylindrical separator 4. The positive electrode mixture 2, the separator 4, and the gel negative electrode 3 contain an alkaline electrolyte. Nonwoven fabric mainly composed of, for example, polyvinyl alcohol fiber and rayon fiber mixed is used as the separator 4.

The positive electrode mixture 2 includes, for example, a positive active material containing nickel oxyhydroxide powder, a conductive agent such as graphite powder, or a mixture of an alkaline electrolyte such as an aqueous potassium hydroxide solution. A mixture of nickel oxyhydroxide powder and manganese dioxide powder may be used as the positive active material.

The gel negative electrode 3 includes, for example, a negative active material such as zinc powder or zinc alloy powder, a gelling agent such as sodium polyacrylate, and a mixture of an alkaline electrolyte such as an aqueous potassium hydroxide solution. The zinc alloy powder highly resistant to corrosion is preferably used as the negative active material, and in an environmentally friendly manner, the zinc alloy powder does not contain any or all of mercury, cadmium, and lead. The zinc alloy includes a zinc alloy containing, for example, indium, aluminum, and bismuth.

FIG. 2 is an enlarged sectional view of a portion X (a sealing portion of the alkaline battery) in FIG. 1.

The battery case 1 houses a power generation element such as the positive electrode mixture 2 and is then provided with a step 1a near an opening, and the opening of the battery case 1 is sealed by an assembly sealing portion 12. The assembly sealing portion 12 includes a negative terminal portion 11, a negative current collector 6 electrically connected to the negative terminal portion 11, and a resin sealing body 5. The negative current collector 6 is inserted in the center of the gel negative electrode 3.

The sealing body 5 includes a central cylindrical portion 13 having a through hole 13a through which the negative current collector 6 is inserted, an outer peripheral cylindrical portion 14 placed between a peripheral edge of the negative terminal portion 11 and an opening end of the battery case 1, and a connecting portion 15 connecting the central cylindrical portion 13 and the outer peripheral cylindrical portion 14 and having a thin portion 15a that serves as a safety valve. The outer peripheral cylindrical portion 14 includes an annular horizontal portion 14b that receives the peripheral edge of the negative terminal portion 11, an upper cylindrical portion 14a raised upward from an outer peripheral edge of the horizontal portion 14b, and a lower cylindrical portion 14c extending downward from an inner peripheral edge of the horizontal portion 14b in a slanting direction. The opening end of the battery case 1 is bent so as to wrap an upper end of the upper cylindrical portion 14a of the sealing body 5, and the bent portion is crimped inward to fasten the peripheral edge of the negative terminal portion 11 with the step 1a. An outer surface of the battery case 1 is coated with an external label 10.

The present invention has a feature in a structure of the negative terminal portion 11 in the assembly sealing portion 12 of the alkaline battery. The negative terminal portion 11 includes a first negative terminal plate 7 and a second negative terminal plate 8 placed apart from each other, and a PTC element 9a placed between the first negative terminal plate 7 and the second negative terminal plate 8.

Specifically, as shown in FIG. 2, the first negative terminal plate 7 has a flange 7a in a peripheral edge and a flat portion 7b in a central portion, and the second negative terminal plate 8 has a flange 8a in a peripheral edge and a flat portion 8b in a central portion. The PTC element 9a is placed between the flat portion 7b of the first negative terminal plate 7 and the flat portion 8b of the second negative terminal plate 8, and an insulation plate 9b is placed between the flange 7a of the first negative terminal plate 7 and the flange 8a of the second negative terminal plate 8. The opening end of the battery case 1 is bent so as to wrap an upper end of the outer peripheral cylindrical portion 14 of the sealing body 5, and the bent portion is crimped inward to fasten the flange 7a of the first negative terminal plate 7, the flange 8a of the second negative terminal plate 8, and the insulation plate 9b. The negative current collector 6 is physically and electrically connected by welding a head 6a thereof to the flat portion 8b of the second negative terminal plate 8. The PTC element 9a has a function of rapidly increasing resistance when reaching predetermined temperature.

The disk-shaped PTC element 9a has, for example, a thickness of 0.2 to 0.4 mm and a diameter of 5 to 7.5 mm.

The ring-shaped insulation plate 9b has, for example, a thickness of 0.2 to 0.4 mm, an inner diameter of 5 to 8 mm, and an outer diameter of 11 to 12 mm.

In order to ensure prevention of a phenomenon in which the first negative terminal plate 7 and the second negative terminal plate 8 come into direct contact with each other to cause a current to pass without the PTC element 9a, and the PTC element does not function and cannot block the current, the first negative terminal plate 7 and the second negative terminal plate 8 are preferably placed so that a boundary between the flange 7a and the flat portion 7b of the first negative terminal plate 7, and a boundary between the flange 8a and the flat portion 8b of the second negative terminal plate 8 are spaced 0.2 to 1 mm apart.

In the alkaline battery, a current path between the first negative terminal plate 7 and the second negative terminal plate 8 is constituted by the PTC element 9a only as described above. Thus, when the battery is externally short-circuited to cause a short circuit current to pass and cause battery temperature to reach predetermined temperature, resistance of the PTC element 9a is increased to ensure reduction in the short circuit current. Specifically, rapid temperature increase of the battery in case of short circuit can be prevented. The PTC element 9a is made of, for example, a material commercially available under the trade name of Polyswitch produced by Tyco Electronics Raychem.

As shown in FIG. 2, the negative terminal portion 11 is constituted by two negative terminal plates 7 and 8, which increases a length of a rising path of the electrolyte, and causes the path to be easily separated, thereby preventing leakage of the electrolyte.

The insulation plate 9b is made of, for example, paper or resin such as polypropylene.

The first negative terminal plate 7 is made of, for example, nickel-plated steel sheet.

The second negative terminal plate 8 is preferably made of tin-plated steel sheet or nickel-plated steel sheet in terms of low contact resistance.

The first and second negative terminal plates 7 and 8 have holes (not shown) for discharging gas out of the battery, for example, in the boundary between the flange 7a and the flat portion 7b and the boundary between the flange 8a and the flat portion 8b. When internal pressure of the battery is abnormally increased, the thin portion 15a of the sealing body 5 is broken to discharge the gas out of the holes.

### EMBODIMENT 2

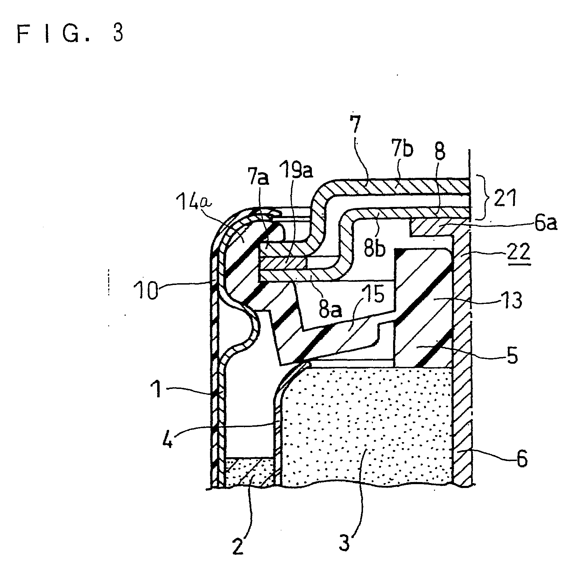

A sealing portion of this embodiment is shown in FIG. 3. A negative terminal portion 21 in an assembly sealing portion 22 includes a first negative terminal plate 7 and a second negative terminal plate 8 spaced apart from each other, and a ring-shaped PTC element 19a placed between a flange 7a of the first negative terminal plate 7 and a flange 8a of the second negative terminal plate 8. An opening end of the battery case 1 is bent so as to wrap an upper end of an upper cylindrical portion 14a of a sealing body 5, and the bent portion is crimped inward to fasten the flange 7a of the first negative terminal plate 7, the flange 8a of the second negative terminal plate 8, and the PTC element 19a. This fastening allows low electrical contact resistance between the PTC element 19a and the negative terminal plates 7 and 8 to be maintained. An insulation plate may be placed between a flat portion 7b of the first negative terminal plate 7 and a flat portion 8b of the second negative terminal plate 8.

The ring-shaped PTC element 19a has, for example, a thickness of 0.2 to 0.4 mm, an inner diameter of 5 to 8 mm, and an outer diameter of 11 to 12 mm.

In order to ensure prevention of a phenomenon in which the first negative terminal plate 7 and the second negative terminal plate 8 come into direct contact with each other to cause a current to pass without the PTC element 19a, and the PTC element does not function and cannot block the current, the first negative terminal plate 7 and the second negative terminal plate 8 are preferably placed so that the flat portion 7b and the flat portion 8b are spaced 0.2 to 1 mm apart.

### EMBODIMENT 3

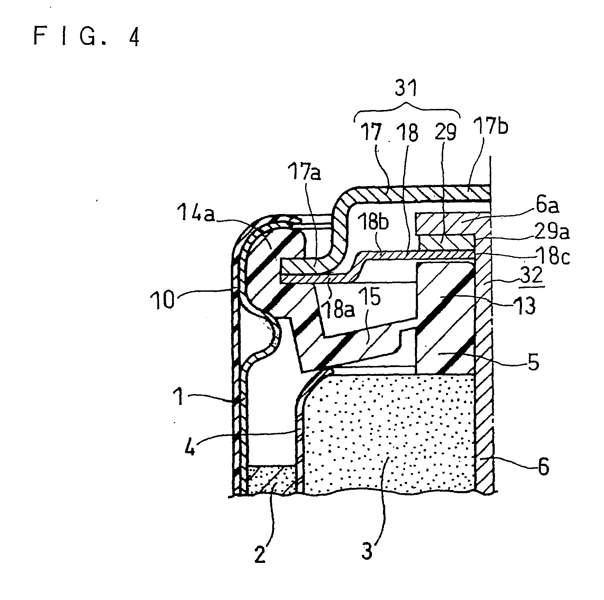

A sealing portion of this embodiment is shown in FIG. 4. A negative terminal portion 31 in an assembly sealing portion 32 includes a first negative terminal plate 17 and a second negative terminal plate 18 spaced apart from each other and having flanges 17a and 18a in peripheral edges and flat portions 17b and 18b in central portions, and a PTC element 29 provided on a flat portion 18b of the second negative terminal plate 18.

The flat portion 18b of the second negative terminal plate 18 and the PTC element 29 have, in the centers, through holes 18c and 29a through which a negative current collector 6 is inserted. The second negative terminal plate 18 and the ring-shaped PTC element 29 are placed between a head 6a of the negative current collector 6 and a central cylindrical portion 13 of the sealing body 5. An opening end of the battery case 1 is bent so as to wrap an upper end of an upper cylindrical portion 14a of a sealing body 5, and the bent portion is crimped inward to fasten the flange 17a of the first negative terminal plate 17 and the flange 18a of the second negative terminal plate 18. An insulation plate may be placed between the head 6a of the negative current collector 6 and the flat portion 17b of the first negative terminal plate 17.

The disk-shaped PTC element 29 has, for example, a thickness of 0.2 to 0.4 mm and a diameter of 4 to 7 mm, and the through hole 29a in the center has a diameter of 1.3 to 2.0 mm.

In order to ensure prevention of a phenomenon in which the first negative terminal plate 17 and the negative current collector 6 come into contact with each other to cause a current to pass without the PTC element 29a, and the PTC element does not function and cannot block the current, the first negative terminal plate 17 and the negative current collector 6 are preferably placed so that the flat portion 17b and the head 6a are spaced 0.2 to 1 mm apart.

### EMBODIMENT 4

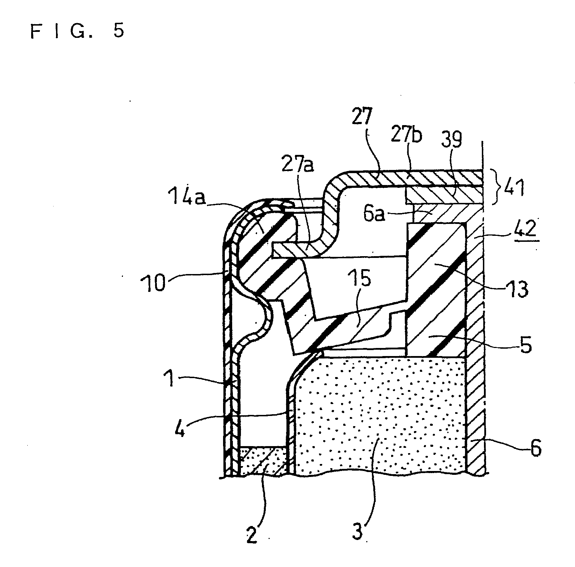

A sealing portion of this embodiment is shown in FIG. 5. A negative terminal portion 41 in an assembly sealing portion 42 includes a negative terminal plate 27 having a flange 27a in a peripheral edge and a flat portion 27b in a central portion, and a disk-shaped PTC element 39 placed on the flat portion 27b of the negative terminal plate 27. The PTC element 39 is placed between a head 6a of a negative current collector 6 and the flat portion 27b of the negative terminal plate 27. An opening end of the battery case 1 is bent so as to wrap an upper end of an upper cylindrical portion 14a of a sealing body 5, and the bent portion is crimped inward to fasten the flange 27a of the negative terminal plate 27.

The disk-shaped PTC element 39 has, for example, a thickness of 0.2 to 0.4 mm, and a diameter of 4 to 7 mm.

In the above described embodiments, the PTC element is provided in the negative terminal portion, but the PTC element may be provided in the positive terminal portion. For example, instead of the battery case 1 that also serves as a positive terminal, a closed-end cylindrical battery case that does not serve as a positive terminal, and a positive terminal portion including a positive terminal plate and a PTC element placed on a surface opposite to a terminal surface of the positive terminal plate may be used, and the positive terminal portion may be placed in a bottom surface of the battery case so that the PTC element is placed between the battery case and the positive terminal plate.

Now, examples of the present invention will be described in detail, but the present invention is not limited to the examples.

### EXAMPLEs 1 to 7

### (1) Preparation of positive electrode mixture

Nickel oxyhydroxide powder and graphite powder (having a mean particle size of 15 µm) were mixed at the weight ratio of 90:10. Then, the mixture and 36% by weight of aqueous potassium hydroxide solution as an alkaline electrolyte were mixed at the weight ratio of 100:3, sufficiently stirred, and then compressed and formed into flakes. Then, the flake positive electrode mixture was ground into granules, the granules were classified by a sieve, and granules of 10 to 100 mesh were pressurized and formed into a hollow cylindrical shape to obtain a pellet positive electrode mixture.

### (2) Preparation of gel negative electrode

Sodium polyacrylate as a gelling agent, 36% by weight of aqueous potassium hydroxide solution as an alkaline electrolyte, and a negative active material were mixed at the weight ratio of 1:33:66 to obtain a gel negative electrode. As the negative active material, zinc alloy powder (having a mean particle size of 135 µm) was used containing 0.025% by weight of indium, 0.015% by weight of bismuth, and 0.004% by weight of aluminum, and containing no mercury and lead.

### (3) Assembly of cylindrical alkaline battery

An AA alkaline battery (LR6) having the structure in FIG. 1 was prepared by the following procedure. FIG. 1 is a front view, partially in section, of a cylindrical alkaline battery. FIG. 2 is an enlarged sectional view of a portion X (a sealing portion) in FIG. 1.

Two positive electrode mixtures 2 obtained from above were inserted into the battery case 1, the positive electrode mixtures 2 were pressurized by a pressure jig and brought into tight contact with an inner wall of the battery case 1. A closed-end cylindrical separator 4 was placed in the center of the positive electrode mixtures 2 in tight contact with the inner wall the battery case 1. A predetermined amount of aqueous solution containing 36 % by weight of potassium hydroxide as an alkaline electrolyte was injected into the separator 4. After the lapse of predetermined time, the gel negative electrode 3 obtained from above was charged inside the separator 4. Nonwoven fabric mainly composed of polyvinyl alcohol fiber and rayon fiber mixed was used as the separator 4.

Next, the battery case 1 housing a power generation element such as the positive electrode mixture 2 was sealed as described below using an assembly sealing portion 12.

A head 6a of a negative current collector 6 and a flat portion 8b of a second negative terminal plate 8 made of a 0.2 mm thick tin-plated steel sheet were electrically welded, and the negative current collector 6 was inserted through a through hole 13a in a central cylindrical portion 13 of a nylon sealing body 5 to obtain an intermediate of the assembly sealing portion.

The battery case 1 was formed with a groove near an opening thereof to form a step 1a, and the intermediate was placed in the opening of the battery case 1 so that a horizontal portion 14b of the intermediate was received on the step 1a. At this time, part of the negative current collector 6 was inserted into the gel negative electrode 3. Then, a ring-shaped insulation plate 9b (having a thickness of 0.3 mm, an inner diameter of 8 mm, and an outer diameter of 11 m) made of polypropylene was placed on a flange 8a of the second negative terminal plate 8 of the intermediate. A disk-shaped PTC element 9a (Polyswitch produced by Tyco Electronics Raychem) having a thickness of 0.3 mm and a diameter of 7.2 mm was placed on the flat portion 8b of the second negative terminal plate 8 of the intermediate. Further, a first negative terminal plate 7 made of a 0.4 mm thick nickel-plated steel sheet was placed on the PTC element 9a and the insulation plate 9b so that the flat portion 7b corresponds to the PTC element 9a and the flange 7a corresponds to the insulation plate 9b. The resistance of the PTC element 9a is 0.03 Ω at 20°C, but significantly increased to 10⁴ Ω at high temperature of 120°C.

Thus, a negative terminal portion 11 was configured in which the PTC element 9a was placed between the flat portion 7b of the first negative terminal plate 7 and the flat portion 8b of the second negative terminal plate 8, and the insulation plate 9b was placed between the flange 7a of the first negative terminal plate and the flange 8a of the second negative terminal plate 8. Then, an opening end of the battery case 1 was bent to wrap an upper end of an upper cylindrical portion 14a of a sealing body 5, and the bent portion was crimped to fasten a peripheral edge of the negative terminal portion 11 by the opening end of the battery case 1 via an outer peripheral cylindrical portion 14 to seal the opening of the battery case 1. An outer surface of the battery case 1 was coated with an external label 10.

In preparation of the alkaline battery, the alkaline battery was prepared with different forms of nickel oxyhydroxide powder as shown in Table 1.

**Table 1**

| | Positive active material | PTC element | Forms of nickel oxyhydroxide powder | | |
|---|---|---|---|---|---|
| | | | Shape of particle | Mean particle size (µm) | Coating layer |
| Com. Ex. 2 | Manganese dioxide | No | - | - | - |
| Com. Ex.3 | Manganese dioxide | Yes | - | - | - |
| Com. Ex-1 | Nickel oxyhydroxide | No | Non-spherical | 18 | No |
| Ex.1 | Nickel oxyhydroxide | Yes | Non- spherical | 18 | No |
| Ex.2 | Nickel oxyhydroxide | Yes | Spherical | 18 | No |
| Ex.3 | Nickel oxyhydroxide | Yes | Non-spherical | 8 | No |
| Ex.4 | Nickel oxyhydroxide | Yes | Non-spherical | 10 | No |
| Ex.5 | Nickel oxyhydroxide | Yes | Non-spherical | 25 | No |
| Ex.6 | Nickel oxyhydroxide | Yes | Non-spherical | 18 | Yes |
| Ex.7 | Nickel oxyhydroxide | Yes | Spherical | 10 | Yes |

The non-spherical nickel oxyhydroxide was prepared using neutralization by the following procedure. An aqueous nickel sulfate solution was dropped in an aqueous sodium hydroxide solution and neutralized to precipitate nickel hydroxide. Then, the nickel hydroxide was dehydrated, cleaned, dried, and then mechanically ground to obtain non-spherical nickel hydroxide. Then, an aqueous sodium hypochlorite solution was added to the non-spherical nickel hydroxide and oxidized, dehydrated, and dried to obtain non-spherical nickel oxyhydroxide.

On the other hand, the spherical nickel oxyhydroxide was prepared using reactive crystallization by the following procedure. Ammonia water was added to an aqueous nickel sulfate solution to stabilize nickel ions as a nickel ammine complex. The nickel ammine complex and an aqueous sodium hydroxide solution were continuously reacted and gradually subjected to crystal growth, then dehydrated and cleaned to obtain slurry. An aqueous sodium hypochlorite solution was added to the slurry and oxidized, then dehydrated and dried to obtain spherical nickel oxyhydroxide.

A 1000 times enlarged image of a broken surface of a particle was photographed using an SEM (scanning electron microscope) (VE-7800 produced by Keyence Corporation, and values of a longer diameter and a shorter diameter obtained from the SEM photograph were used to calculate an aspect ratio (longer diameter/shorter diameter). A particle of an aspect ratio more than 1.5 was determined as non-spherical, and a particle of an aspect ratio of 1.5 or less was determined as spherical.

A mean particle size of nickel oxyhydroxide powder was controlled by a mean particle size of nickel hydroxide powder that is a starting material.

Nickel oxyhydroxide powder constituted by a particle having a cobalt hydroxide layer on a surface was prepared as described below.

Nickel hydroxide was introduced into a reaction vessel, cobalt sulfate in an aqueous ammonium solution and an aqueous sodium hydroxide solution were supplied so that a mixture in the vessel has a constant pH to form a layer constituted by β cobalt hydroxide on a surface of a nickel oxyhydroxide particle. The particle was heated in the aqueous sodium hydroxide solution to remove sulfate group in the particle, then rinsed and dried to obtain nickel oxyhydroxide powder constituted by the particle having the cobalt hydroxide layer on the surface. At this time, the surface of the particle was etched with argon by X-ray photoelectron spectroscopy (ESCA) using XPS7000 produced by Rigaku Denki Corporation, and distribution of cobalt element in a depth direction was traced to calculate a thickness of the cobalt hydroxide layer. The result revealed that the thickness of the cobalt hydroxide layer was 200 to 300 Å.

### COMPARATIVE EXAMPLE 1

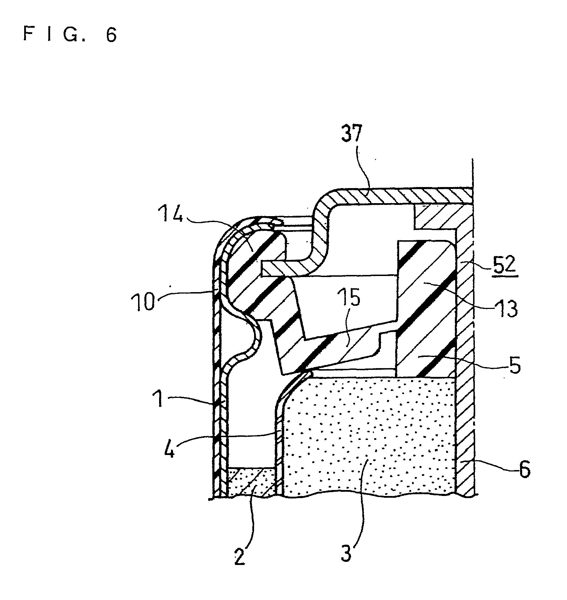

An alkaline battery was prepared in the same manner as in Example 1 except that a negative terminal portion was constituted by a first negative terminal plate 37 only as shown in FIG. 6.

### COMPARATIVE EXAMPLE 2

An alkaline battery was prepared in the same manner as in Comparative Example 1 except that manganese dioxide powder (having a mean particle size of 35 µm) was used instead of nickel oxyhydroxide powder as a positive active material.

### COMPARATIVE EXAMPLE 3

Ninety parts by weight of powder of electronically conductive material having a PTC function and mainly composed of polyethylene having a conductivity of 5 S/cm at room temperature, and a conductivity of 5 µS/cm at 120°C (operation temperature), and 10 parts by weight of polyvinylidene fluoride as a binder were dispersed in N-methylpyrrolidinone to obtain paste. A head 6a of a negative current collector 6 and a flat portion 17b of a first negative terminal plate 17 were welded, then the paste was applied on the entire surface of the negative current collector 6, and dried at 60°C for 12 hours. An alkaline battery was prepared in the same manner as in Comparative Example 1 except using the negative current collector.

For each of the batteries obtained from above, a battery case and a first negative terminal plate were connected by a 0.1 mm thick nickel lead to externally short-circuit the battery. Surface temperature of a battery barrel was measured by a thermocouple to check the maximum temperature on the surface of the battery.

The evaluation results are shown in Table 2.

**Table 2**

| | Maximum temperature on surface of battery in case of short circuit (°C) |
|---|---|
| Com. Ex.2 | 128 |
| Com. Ex.3 | 83 |
| Com. Ex.1 | 149 |
| Ex.1 | 75 |
| Ex.2 | 73 |
| Ex.3 | 73 |
| Ex.4 | 72 |
| Ex.5 | 81 |
| Ex.6 | 72 |
| Ex.7 | 70 |

For the batteries in Comparative Examples 1 and 2 including no PTC element, battery temperature was significantly increased in case of external short circuit.

For the battery in Comparative Example 3, the PTC element was placed in the battery, thereby significantly preventing increase in battery temperature in case of external short circuit immediately after assembly of the battery. However, the same short circuit test was conducted after the battery was kept at room temperature for three months, and the result was that the maximum temperature of the battery in case of short circuit was 125°C and the battery temperature was significantly increased. This is because the PTC element is placed in contact with an electrolyte in a power generation element, and an electronic conductor having a PTC function provided on a surface of a negative current collector is decomposed by the contact with the alkaline electrolyte during keeping to prevent exertion of the PTC function.

For the batteries including the PTC element in Examples 1 to 7, increase in battery temperature in case of external short circuit was significantly prevented, and the increase in battery temperature was prevented more effectively than the battery in Comparative Example 3 using the negative current collector with the PTC function and the positive active material composed of manganese dioxide.

Particularly, for the batteries in Examples 1 to 4, 6 and 7 including at least one of a case where a mean particle size of nickel oxyhydroxide powder is 8 to 18 µm, a case where a particle has a spherical shape having an aspect ratio of 1.5 or less, and a case where a cobalt hydroxide layer is formed on a particle surface, the increase in battery temperature in case of external short circuit was prevented.

The alkaline battery according to the present invention has high reliability and is suitably used for power supplies of electronic equipment or portable equipment or the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

An alkaline battery according to the present invention includes: a power generation element including a positive electrode, a negative electrode, a separator placed between the positive electrode and the negative electrode, and an electrolyte; a positive terminal portion electrically connected to the positive electrode; and a negative terminal portion electrically connected to the negative electrode. The positive electrode contains at least nickel oxyhydroxide powder as an active material. A PTC element is provided in a current path that does not come into contact with the electrolyte at least one of between the positive electrode and the positive terminal portion and between the negative electrode and the negative terminal portion.

## Claims

1. An alkaline battery comprising:
a power generation element including a positive electrode, a negative electrode, a separator placed between said positive electrode and said negative electrode, and an electrolyte;
a positive terminal portion electrically connected to said positive electrode; and
a negative terminal portion electrically connected to said negative electrode,
wherein said positive electrode contains at least nickel oxyhydroxide powder as an active material, and
a PTC element is provided in a current path that does not come into contact with said electrolyte at least one of between said positive electrode and said positive terminal portion and between said negative electrode and said negative terminal portion.

2. The alkaline battery in accordance with claim 1, further comprising:
a battery case that houses said power generation element and also serves as said positive terminal portion; and
an assembly sealing portion that closes an opening of said battery case,
wherein said assembly sealing portion includes the negative terminal portion, a negative current collector electrically connected to said negative terminal portion, and a resin sealing body,
said sealing body includes a central cylindrical portion having a through hole through which said negative current collector is inserted, an outer peripheral cylindrical portion placed between a peripheral edge of said negative terminal portion and an opening end of said battery case, and a connecting portion that connects said central cylindrical portion and said outer peripheral cylindrical portion,
said opening end of said battery case is bent so as to wrap an upper end of the outer peripheral cylindrical portion of said sealing body, and the bent portion is crimped inward to fasten the peripheral edge of said negative terminal portion, and
said negative terminal portion includes said PTC element.

3. The alkaline battery in accordance with claim 2, wherein said negative terminal portion includes a first negative terminal plate and a second negative terminal plate spaced apart from each other and each having a flange in a peripheral edge and a flat portion in a central portion, said PTC element placed between the flat portion of said first negative terminal plate and the flat portion of said second negative terminal plate, and an insulation plate placed between the flange of said first negative terminal plate and the flange of said second negative terminal plate,
the opening end of said battery case is bent so as to wrap the upper end of the outer peripheral cylindrical portion of said sealing body, and the bent portion is crimped inward to fasten the flange of said first negative terminal plate, the flange of said second negative terminal plate, and said insulation plate.

4. The alkaline battery in accordance with claim 2, wherein said negative terminal portion includes a first negative terminal plate and a second negative terminal plate spaced apart from each other and each having a flange in a peripheral edge and a flat portion in a central portion, and a PTC element placed between the flange of said first negative terminal plate and the flange of said second negative terminal plate,
the opening end of said battery case is bent so as to wrap the upper end of the outer peripheral cylindrical portion of said sealing body, and the bent portion is crimped inward to fasten the flange of said first negative terminal plate, the flange of said second negative terminal plate, and said PTC element.

5. The alkaline battery in accordance with claim 2, wherein said negative terminal portion includes a first negative terminal plate and a second negative terminal plate spaced apart from each other and each having a flange in a peripheral edge and a flat portion in a central portion, and said PTC element placed on the flat portion of said second negative terminal plate,
the flat portion of said second negative terminal plate and said PTC element have, in the centers, through holes through which said negative current collector is inserted,
said second negative terminal plate and said PTC element are placed between a head of said negative current collector and said central cylindrical portion,
said PTC element is placed between the head of said negative current collector and the flat portion of said second negative terminal plate,
the opening end of said battery case is bent so as to wrap the upper end of the outer peripheral cylindrical portion of said sealing body, and the bent portion is crimped inward to fasten the flange of said first negative terminal portion and the flange of said second negative terminal plate.

6. The alkaline battery in accordance with claim 2, wherein said negative terminal portion includes a negative terminal plate having a flange in a peripheral edge and a flat portion in a central portion, and said PTC element placed on the flat portion of said negative terminal plate,
said PTC element is placed between a head of said negative current collector and the flat portion of said negative terminal plate,
the opening end of said battery case is bent so as to wrap the upper end of the outer peripheral cylindrical portion of said sealing body, and the bent portion is crimped inward to fasten the flange of said negative terminal portion.

7. The alkaline battery in accordance with claim 1 or 4, wherein said nickel oxyhydroxide powder is substantially spherical.

8. The alkaline battery in accordance with claim 1 or 4, wherein a mean particle size of said nickel oxyhydroxide powder is 8 to 18 µm.

9. The alkaline battery in accordance with claim 1, wherein a surface of said nickel oxyhydroxide powder is coated with a layer containing cobalt.

10. The alkaline battery in accordance with claim 1, wherein said nickel oxyhydroxide powder contains 0.5 to 2.0 mol% of cobalt as a solid solution or eutectic element.

11. The alkaline battery in accordance with claim 1, wherein said nickel oxyhydroxide powder contains 2 to 10 mol% of manganese as a solid solution or eutectic element.

12. The alkaline battery in accordance with claim 1, wherein said nickel oxyhydroxide powder contains 2 to 5 mol% of calcium as a solid solution or eutectic element.

13. The alkaline battery in accordance with claim 1, wherein said nickel oxyhydroxide powder contains 2 to 5 mol% of zinc as a solid solution or eutectic element.

14. The alkaline battery in accordance with claim 1, wherein said nickel oxyhydroxide powder contains 2 to 5 mol% of magnesium as a solid solution or eutectic element.
